# EUROPÄISCHE PATENTSCHRIFT

(11) **EP 0 376 111 B1**
(45) Veröffentlichungstag und Bekanntmachung des Hinweises auf die Patenterteilung: **12.04.1995**
(21) Anmeldenummer: 89123344.7
(22) Anmeldetag: 18.12.1989
(51) Int. Cl.: G01N 21/86

(54) **Testträger-Analysesystem**
Test strip analysing system
Analyseur pour bandes de test

(30) Priorität: 28.12.1988 DE 3844103
(43) Veröffentlichungstag der Anmeldung: 04.07.1990
(73) Patentinhaber: BOEHRINGER MANNHEIM GMBH, 68298 Mannheim (DE)
(72) Erfinder: Pauli, Manfred, D-6830 Schwetzingen (DE); Schüssler, Rudolf, D-6840 Lampertheim (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 037 484
- EP-A- 0 129 220
- EP-A- 0 183 524
- DE-U- 8 716 270

## Beschreibung

Die Erfindung betrifft ein Testträgeranalysesystem, bestehend aus Testträgern mit einer Meßfläche und einem zugehörigen Auswertegerät.

Für die Analyse von Flüssigkeiten, insbesondere Körperflüssigkeiten, wie Blut oder Urin werden zunehmend Testträger-Analysesysteme verwendet. Die Testträger haben eine oder mehrere Reagenzien enthaltende Testschichten. Bringt man diese mit der Probe in Kontakt, so läuft eine Reaktion ab, die schließlich zu einem nachweisbaren Signal,insbesondere zu einer Farbänderung in einer Nachweisschicht,führt.

Die Auswertegeräte sind auf die Testträger, mit denen sie ein System bilden, abgestimmt. Man unterscheidet Ein-Parameter-Systeme, mit denen nur eine bestimmte Analyse (beispielsweise Glucose im Blut), durchgeführt werden kann und Mehr-Parameter-Systeme, die mit mehreren verschiedenen jeweils auf eine Analyse abgestimmten Testträgertypen arbeiten, die alle mit dem gleichen Gerät ausgewertet werden.

Es gibt verschiedene Formen von Testträgern. Bekannt sind insbesondere im wesentlichen quadratische Plättchen, die auch als Slides bezeichnet werden, in deren Mitte sich ein mehrschichtiger Schichtverbund befindet. Andere Testträger sind als langgestreckte Teststreifen ausgebildet, auf deren Basisschicht aus Kunststoff die Testschichten angeordnet sind. Die Erfindung bezieht sich insbesondere auf Testträger der letztgenannten Art.

Die Positionierung der Testträger in dem Auswertegerät ist sowohl für die Genauigkeit der Analyse als auch für die Einfachheit der Handhabung von nicht zu unterschätzender Bedeutung. Bei der üblichen reflexionsphotometrischen Messung kommt es, wie unmittelbar einsichtig ist, wesentlich auf den Abstand der Nachweisschicht von der Meßoptik an. Aber auch in Längs- und Querrichtung des Testträgers müssen sehr enge Toleranzen eingehalten werden, zumal die Testschichtflächen immer kleiner gemacht werden, um Reagenzien zu sparen, während andererseits die Meßgenauigkeit es erfordert, einen möglichst großen Teil der Nachweisschicht als Meßfläche der Auswertung zugrundezulegen.

Aus der EP-A 129220 (bzw. US 4 780 283) ist ein Testträger-Analysesystem bekannt, bei welchem die verwendeten streifenförmigen Testträger sowohl an dem Ende, mit dem sie in das Gerät eingeführt werden (Einführungsende), als auch an dem anderen Ende (Handhabungsende) ein Loch haben. Entsprechend sind an dem Gerät zwei stiftförmige Fixierungselemente vorgesehen, die formschlüssig in das entsprechende Loch des Testträgers eingreifen. Eine sehr gute Exaktheit der Positionierung wird bei der bekannten Vorrichtung dadurch erreicht, daß der Testträger in Längsrichtung gespannt ist. Hierzu ist bei dem dem Handhabungsende des Testträgers zugeordneten Fixierungselement eine Feder vorgesehen.

Die bekannte Vorrichtung erlaubt eine genaue Positionierung, jedoch ist die Handhabung verhältnismäßig aufwendig, weil der Testträger nacheinander an beiden Enden fixiert werden muß. Außerdem ist ein relativ hoher konstruktiver Aufwand erforderlicht.

Um ein Testträger-Analysesystem mit verbesserten Handhabungseigenschaften bei möglichst geringem konstruktiven Aufwand und sehr guter Positioniergenauigkeit zur Verfügung zu stellen, wird erfindungsgemäß ein Testträger-Analysesystem entsprechend Anspruch 1 vorgeschlagen. Dadurch läßt sich mit nur einem beweglichen Teil eine zuverlässige und genaue Positionierung des Testträgers in allen drei Raumrichtungen erreichen. Es ist nur eine Ausnehmung in der Nähe des Einführungsendes des Testträgers erforderlich. Die Einführung ist vereinfacht und das Handhabungsende des Testträgers bleibt frei. Überraschenderweise ergibt sich dennoch eine ausreichende Planlage, um auch die Thermostatisierung der Meßfläche mit Hilfe einer in der Testträgerlauflage angeordneten Heizplatte zu ermöglichen.

Besonders bevorzugt ist eine Ausführungsform der Erfindung, bei der als Betätigungsorgan eine schwenkbare Hebeleinrichtung verwendet wird. Die Betätigung des Fixierungselementes über eine Hebeleinrichtung ist aus der oben zitierten EP-A 129220 grundsätzlich bekannt, jedoch ist sie bei der vorliegenden Erfindung weitgehend verschieden ausgestaltet und angeordnet, wie im folgenden noch näher erläutert wird. Dadurch wird eine besonders einfach aufgebaute und dennoch besonders leicht handhabbare Positionierung des Testträgers ermöglicht.

Die Erfindung wird im folgenden anhand eines in den Figuren schematisch dargestellten Ausfuhrungsbeispiels näher erläutert; es zeigen:
- Fig. 1: eine Seitenansicht auf den Auswerteteil eines erfindungsgemäßen Testträger-Analysesystems in der Meßposition,
- Fig. 2: einen Schnitt entlang der Linie II-II von Fig. 1,
- Fig. 3: eine Seitenansicht der wesentlichen Funktionselemente einer bevorzugten Ausführungsform in der Meßposition,
- Fig. 4: eine Ansicht gemäß Fig. 3 in der Einführungsposition.

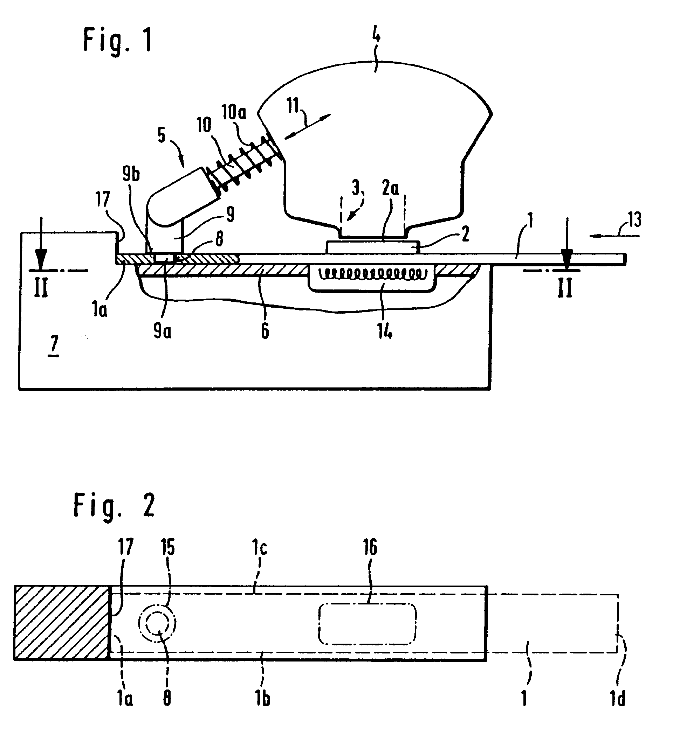

Die Figuren 1 und 2 dienen zur Erläuterung des erfinderischen Prinzips anhand einer ersten Ausführungsform. Der Testträger 1 befindet sich in der Meßposition, d.h. seine Nachweisschicht 2 mit der Meßfläche 2a ist exakt unter der lediglich andeutungsweise durch gestrichelte Linien dargestellten Meßöffnung 3 einer Optikeinheit 4 angeordnet. Der Testträger 1 liegt mit seiner Unterseite auf einer Testträgerauflage 6 auf, die an einem Rahmenteil 7 des Gerätes befestigt ist.

Der Testträger 1 wird in der Fig. von rechts nach links in die insgesamt mit 5 bezeichnete Positioniereinrichtung eingeführt. In der Nähe seines vorderen Endes, das auch als Einführende 1a bezeichnet wird, befindet sich eine Ausnehmung 8, die zweckmäßigerweise als kreisrundes Loch ausgebildet ist, jedoch auch eine andere Form haben kann.

In die Ausnehmung 8 greift als Fixierungselement ein Stift 9 ein, der an einer Betätigungsstange 10 befestigt ist, die ihrerseits axial in Richtung des Pfeiles 11 beweglich ist. Zu diesem Zweck kann -wie dargestellt- eine die Betätigungsstange 10 umgebende Druckfeder 10a und ein im vorliegenden Fall im Gehäuse der Optikeinheit untergebrachter, in der Figur nicht dargestellter Elektromagnet vorgesehen sein. Auf Einzelheiten der konkreten Realisierung des Betätigungsorgans für das Fixierungselement 9 kommt es nicht an. Dem Fachmann sind Alternativen -beispielsweise ein elektromotorischer Spindelantriebohne weiteres geläufig. Wesentlich für die Erfindung ist jedoch, daß auf den Fixierungsstift 9 eine Kraft wirkt, die eine Komponente parallel zu der Testträgeroberfläche in der durch den Pfeil 13 bezeichneten Einführungsrichtung und eine Komponente senkrecht von oben auf die Testträgeroberfläche hat.

Um diese Kraft auf den Testträger 1 zu übertragen hat das Fixierungselement 9 an seinem in die Ausnehmung 8 eindringenden vorderen Ende 9a einen geringeren Querschnitt als weiter hinten. An der Übergangsstelle entsteht ein Tiefenanschlag in Form einer ringförmigen Stützfläche 9b, die sich gegen den Rand der Ausnehmung 8 abstützt. Weiterhin ist wesentlich, daß die Testträgerauflage 6 den in der Meßposition befindlichen Testträger mindestens in der Umgebung der Ausnehmung und unterhalb der Meßfläche in einer geraden Ebene unterstützt. Im dargestellten Fall ist die Testträgerauflage 6 als durchgehende Auflagefläche mit einer bündig eingelassenen Heizplatte 14 zur Temperierung der Nachweisschicht 2 ausgebildet. Es wäre jedoch ausreichend, wenn die in der Figur 2 strichpunktiert dargestellten Bereiche 15 und 16 eine ebene Auflage bilden. Dies könnte beispielsweise zweckmäßig sein, wenn zwischen diesen Bereichen andere Bauelemente des Gerätes (beispielsweise ein Lesekopf zur Erkennung einer auf dem Testträger aufgebrachten Codierung) angebracht sein sollen.

Schließlich stellt der Anschlag 17 ein wesentliches Element der Erfindung dar. Er begrenzt die Bewegung des Testträgers in Einführrichtung 13. Der Anschlag 17 verläuft im wesentlichen senkrecht zu der Ebene der Testträgerauflage 6 und ist zweckmäßigerweise wie dargestellt als gerade Anschlagfläche ausgebildet, an die die Stirnkante des (in Fig.2 gestrichelt dargestellten) Testträgers über ihre ganze Länge anliegt. Dadurch ergibt sich eine Ausrichtung der Testträger-Längsachse. Alternativ kann jedoch auch ein mehr oder weniger punktförmiger Anschlag vorgesehen sein, wobei dann die Ausrichtung des Testträgers durch eine seitliche Führung seiner Langskanten (1b,1c in Fig. 2) sichergestellt wird.

Vorteilhafterweise ist, wie in den Figuren 1 und 2 dargestellt, die Testträgerauflage 6 kürzer als die Länge des Testträgers 1. Dadurch ragt dessen Handhabungsende 1d über die Testträgerauflage 6 hinaus, wodurch das Einführen und das Herausnehmen erleichtert wird.

Zum Einführen des Testträgers wird die Positionseinrichtung in eine in den Figuren 1 und 2 nicht dargestellte Einführungsposition gebracht, bei der die Optikeinheit 4 senkrecht nach oben angehoben und die Betätigungsstange 10 in das Gehäuse der Optikeinheit 4 hinein angezogen ist. In dieser Position wird der Testträger 1 in Richtung des Pfeiles 13 bis an den Anschlag 17 eingeführt. Danach wird die Optikeinheit 4 abgesenkt, bis ihre Meßöffnung 3 knapp über der Meßfläche 2 ist. In dieser Position wird die Haltestange 10 aus der Optikeinheit 4 in der Figur nach links unten herausgefahren, wobei der Fixierungsstift 9 in die Ausnehmung 8 eingreift und den Testträger in dem er wähnten Sinne nach links gegen den Anschlag 17 und nach unten gegen die Testträgerauflage 6 andrückt. Damit ist der Testträger 1 exakt fixiert. Die Optikeinheit 4 wird in die endgültige Meßposition abgesenkt.

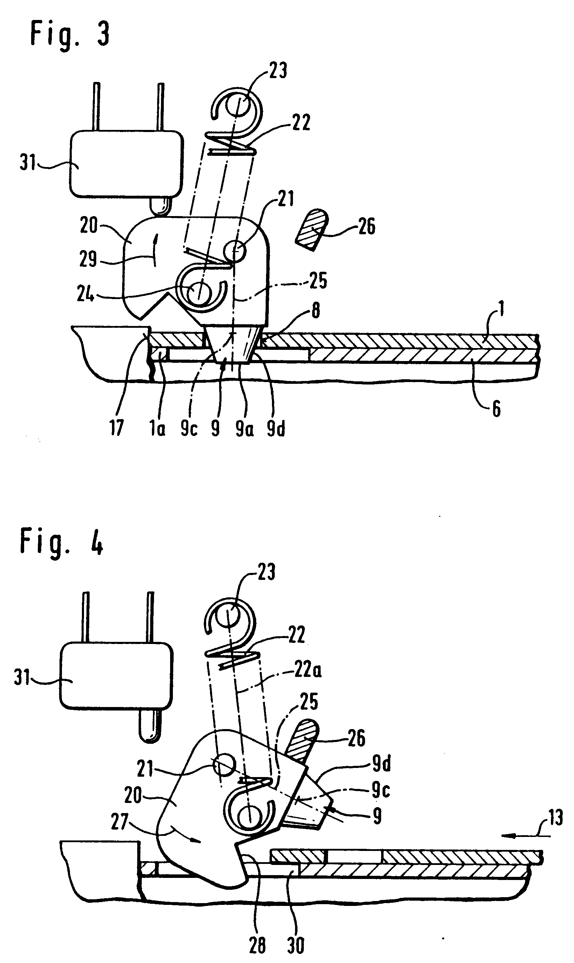

Die Figuren 3 und 4 zeigen beispielhaft eine Ausführungsform der Erfindung, bei der als Betätigungsorgan für das Fixierungselement eine schwenkbare Hebeleinrichtung verwendet wird.

Die Hebeleinrichtung ist zweckmäßigerweise, wie dargestellt, als Betätigungsscheibe 20 ausgebildet, die um eine parallel zu der Testträgerauflage 6 quer zur Einführungsrichtung 13 verlaufende Schwenkachse 21 schwenkbar ist. Das Fixierungselement 9 ist fest mit der Betätigungsscheibe 20 verbunden und vorzugsweise einstückig mit dieser hergestellt. Um das Eindringen in die Ausnehmung 8 des Testträgers 1 zu erleichtern, läuft es zu dem vorderen Ende 9a hin konisch zu. Der Durchmesser des Konus ist an seiner dicksten Stelle größer als der Durchmesser der Ausnehmung 8, so daß die sich erweiternde Außenfläche 9d des Konus als Tiefenanschlag wirkt, der die Eindringtiefe begrenzt (Fig. 3).

Die Betätigungsscheibe 20 steht unter der Kraftwirkung einer Zugfeder 22, die einerseits gerätefest an einem oberen Anlenkpunkt 23 und andererseits an der Betätigungsscheibe 20 mit einem unteren Anlenkpunkt 24 befestigt ist. Die Feder 22 ist dabei so an die Betätigungsscheibe angelenkt, ausgerichtet und in ihrer Federkraft dimensioniert, daß eine ausreichende Kraftbelastung im oben angesprochenen Sinne, also in Einführungsrichtung 13 und senkrecht dazu in Richtung auf die Testträgerauflage 6 erreicht wird.

Im dargestellten Fall wird dies dadurch erreicht, daß die Feder 22 im wesentlichen vertikal von der Testträgerauflage nach oben an einem Anlenkpunkt 24 angreift, welcher gegenüber der Verbindungslinie 25 zwischen der Schwenkachse 21 und dem Zentrum 9c des Tiefenanschlags 9d in Richtung auf den Anschlag 17 versetzt ist. Grundsätzlich kann die erwähnte Kraftwirkung jedoch auch in anderer Weise, beispielsweise mit Hilfe einer nach unten wirkenden Zugfeder erzielt werden, welche an einem Anlenkpunkt eingreift, der gegenüber der Verbindungslinie 25 von dem Anschlag 17 weg (also in Fig. 3 nach rechts) versetzt ist.

Die Betätigungsscheibe 20 kann beispielsweise elektromotorisch bewegt werden. Besonders bevorzugt ist jedoch wegen ihrer Einfachheit eine Betätigung durch den Teststreifen selbst, wie sie in den Figuren 3 und 4 dargestellt ist.

Dabei ist der Anlenkpunkt 24 der Feder 22 an der Betätigungsscheibe 20 so angeordnet, daß die Feder 22 beim Schwenken der Betätigungsscheibe 20 einen Zustand maximaler Federspannung durchläuft, der einem Scheitelpunkt der Schwenkbewegung entspricht, so daß die Federkraft beidseitig des Scheitelpunktes von diesem weg wirkt.

In Fig. 4 ist die Einführposition einer solchen Positioniereinrichtung dargestellt. Dabei liegt die Betätigungsscheibe 20 an einem Schwenkanschlag 26 an, der den Schwenkweg in der Einführposition begrenzt. Die Achse 22a der Feder 22 kreuzt die oben definierte Verbindungslinie 25, so daß eine Kraft in Richtung des Pfeiles 27 wirkt.

Die Betätigungsscheibe 20 hat eine Kontaktfläche 28, die so angeordnet ist, daß ein in Richtung des Pfeiles 13 eingeführter Testträger 1 gegen sie anschlägt und ein entsprechendes Drehmoment in Richtung des Pfeiles 29 ausübt. Dadurch wird die Betätigungsscheibe in die Meßposition (Fig. 3) geschwenkt. Die Testträgerauflage 6 weist zweckmäßigerweise eine Ausnehmung 30 (hier in Form eines Längsschlitzes) auf, in die die Betätigungsscheibe eingreift.

Der Abstand zwischen der Kontaktfläche 28 und dem Fixierungsstift 9 ist auf den Abstand zwischen dem Einführungsende 1a und der Ausnehmung 8 des Testträgers 1 abgestimmt. Dadurch greift der Fixierungsstift 9 während des Schwenkvorgangs in die Ausnehmung ein. Etwa gleichzeitig wird der Scheitelpunkt (Punkt maximaler Ausdehnung der Feder 22) überwunden. Danach wirkt die Federkraft in Richtung des Pfeiles 29 bis das Einführungsende 1a des Testträgers 1 an den Anschlag 17 anschlägt. Bevorzugt ist dabei der obere Anlenkpunkt 23 der Feder 22 etwa in der Verlängerung der Verbindungslinie 25 angeordnet, während der untere Anlenkpunkt gegenüber dieser Verbindungslinie in Richtung auf den Anschlag 17 versetzt ist. Es wird eine verhältnismäßig kräftige Feder verwendet, die in der Einbaulage vorgespannt ist, d.h. auch in den Positionen geringster Federdehnung an beiden Enden des Schwenkweges gedehnt ist. Bevorzugt ist eine relativ kurze kräftige Feder mit einem Federkennwert (C-Wert) von mindestens etwa 0,2 N/mm, welche so vorgespannt ist, daß die resultierende Federkraft mindestens etwa 1N beträgt. Um eine leichte Betätigung zu erreichen ist die Kontaktfläche 28 weiter von der Schwenkachse 21 entfernt als der Anlenkpunkt 24 der Feder 21.

Beim Erreichen der Meßposition wird von der Betätigungsscheibe 20 ein Mikroschalter 31 betätigt, um der Auswerteschaltung des Gerätes das Erreichen der Meßposition zu signalisieren. Der Mikroschalter 31 begrenzt jedoch nicht den Schwenkweg der Betätigungsscheibe 20 in der Meßposition.

Vielmehr wird dieser nur durch das Anliegen des Einführungsendes 1a an dem Anschlag 17 begrenzt.

Dem Fachmann sind zahlreiche Abwandlungen der hier dargestellten Konstruktionselemente geläufig. So kann als Hebeleinrichtung statt der dargestellten Betätigungsscheibe eine beliebige andere Hebelkonstruktion verwendet werden, bei der insgesamt eine entsprechende Schwenkbewegung der beschriebenen Anlenk-bzw. Anschlagpunkte und des Fixierungselementes um eine Schwenkachse resultiert. Das Fixierungselement muß auch nicht permanent starr mit der Hebeleinrichtung verbunden sein. Es genügt, wenn in der Meßposition eine feste Verbindung in der Weise gegeben ist, daß die erfindungsgemäße Kraftübertragung erzielt wird. Schließlich kann statt der dargestellten Feder ein anderes bekanntes Federelement, beispielsweise auf pneumatischer Basis, eingesetzt werden.

## Patentansprüche

1. Testträger-Analysesystem, bestehend aus Testträgern (1) mit einer Meßfläche (2a) und einem zugehörigen Auswertegerät,
bei welchem die Testträger (1) mindestens eine Ausnehmung (8) haben und das Auswertegerät eine Positioniereinrichtung (5) aufweist, um einen Testträger (1) in der Meßposition zu positionieren,
die Positioniereinrichtung (5) eine Auflage (6) für den Testträger und ein in der Meßposition formschlüssig in die Ausnehmung (8) des Testträgers (1) eingreifendes mit einem Betätigungsorgan verbundenes Fixierungselement (9) aufweist,
die Testträger auflage (6) so ausgebildet ist, daß sie den Testträger (1) in der Meßposition mindestens in der Umgebung der Ausnehmung (8) in einer geraden Ebene unterstützt,
die Positioniereinrichtung (5) einen Anschlag (17) aufweist, gegen den der Testträger (1) in der Meßposition mit seinem in Einführungsrichtung (13) vorderen Ende (la, Einführungsende) anschlägt,
das Fixierungselement (9) einen die Eindringtiefe in die Ausnehmung (8) begrenzenden Tiefenanschlag (9b, 9d) aufweist, und
das Betätigungsorgan (10,20) und das Fixierungselement (9) so angeordnet und ausgebildet sind, daß sie auf den Testträger (1) in der Meßposition eine Druckkraft ausüben, die eine Komponente parallel zur Testträgeroberfläche in Richtung auf den Anschlag (17) und eine Komponente senkrecht auf die Testträgeroberfläche in Richtung auf die Testträgerauflage (6) aufweist, so daß sie den Testträger (1) sowohl auf die Testträgerauflage (6) als auch gegen den Anschlag (17) drückt.

2. Testträger-Analysesystem nach Anspruch 1, bei welchem die Testträgerauflage (6) kürzer als die Dimension des Testträgers (1) in Einführungsrichtung (13) ist, so daß sein Handhabungsende (1d) über die Testträgerauflage (6) hinausragt.

3. Testträger-Analysesystem nach Anspruch 1, bei welchem der in die Ausnehmung (8) eindringende Teil des Fixierungselementes (9) konisch ausgebildet ist.

4. Testträger-Analysesystem nach Anspruch 1, bei welchem das Betätigungsorgan als unter Krafteinwirkung eines Federelementes (22) um eine Schwenkachse (21) schwenkbare Hebeleinrichtung (20) ausgebildet ist,
die Hebeleinrichhtung oberhalb der Testträgerauflage (6) angeordnet ist,
das Fixierungselement (9) mindestens in der Meßposition positionsstabil mit der Hebeleinrichtung (20) verbunden ist und
das Federelement (22) derartig an die Hebeleinrichtung (20) angelenkt, ausgerichtet und in seiner Federkraft dimensioniert ist, daß in der Meßposition eine ausreichende Kraftbelastung zur Positionierung des Testträgers (1) resultiert.

5. Testträger-Analysesystem nach Anspruch 4, bei welchem die Verbindungslinie (25) zwischen der Schwenkachse (21) der Hebeleinrichtung (20) und dem Zentrum (9c) des Tiefenanschlags (9d) des Fixierungselementes (9) in der Meßposition näherungsweise senkrecht verläuft.

6. Testträger-Analysesystem nach Anspruch 4, bei welchem
der Anlenkpunkt (24) der Feder (22) an der Hebeleinrichtung (20) in Relation zu der Schwenkachse (21) so angeordnet ist, daß das Federelement (22) beim Schwenken der Hebeleinrichtung (20) einen Zustand maximaler Federspannung durchläuft, der einem Scheitelpunkt der Schwenkbewegung entspricht, so daß die Federkraft beidseitig des Scheitelpunktes vom Scheitelpunkt weg wirkt,
der Schwenkweg der Hebeleinrichtung (20) in der Einführposition durch einen Schwenkanschlag (26) begrenzt ist, und
die Hebeleinrichtung (20) eine Kontaktfläche (28) für den Testträger (1) aufweist, die so angeordnet ist, daß ein auf der Testträgerauflage (6) in das Gerät eingeschobener Testträger (1) gegen sie anschlägt.

7. Testträger-Analysesystem nach Anpruch 4, bei welchem die Testträgerauflage (6) als Fläche mit einer Ausnehmung (30) ausgebildet ist, in die die Hebeleinrichtung (23) eingreift.

8. Testträger-Analysesystem nach Anspruch 6, bei welchem die Kontaktfläche (28) weiter von der Schwenkachse entfernt ist als der Anlenkpunkt (24) des Federelementes (22).

9. Testträger-Analysesystem nach Anspruch 4, bei welchem ein Mikroschalter (31) so positioniert ist, daß er in der Meßposition von der Hebeleinrichtung (20) betätigt wird.

## Claims

1. Test carrier analysis system, consisting of test carriers (1) with a measurement area (2a) and an associated evaluation apparatus,
wherein the test carriers (1) have at least one recess (8) and the evaluation apparatus comprises a positioning device (5) for positioning a test carrier (1) in the measurement position,
the positioning device (5) comprises a rest (6) for the test carrier and a fixing element (9) connected to an actuating organ and engaging positively with the recess (8) of the test carrier (1) in the measurement position,
the test carrier rest (6) is so constructed that it supports the test carrier (1) in the measurement position at least in the vicinity of the recess (8) in a level plane,
the positioning device (5) comprises a stop (17) against which the test carrier (1) butts with its front end (la, introduction end) in the introduction direction (13) when it is in the measurement position,
the fixing element (9) comprises a bit stop (9b, 9d) limiting the depth of penetration into the recess (8), and
the actuating organ (10, 20) and the fixing element (9) are so disposed and constructed that they exert onto the test carrier (1) in the measurement position a pressing-on force which has a component parallel to the test carrier surface in direction onto the stop (17) and a component vertically onto the test carrier surface in direction onto the test carrier rest (6), so that it presses the test carrier (1) both onto the test carrier rest (6) and against the stop (17).

2. Test carrier analysis system according to claim 1, wherein the test carrier rest (6) is shorter than the dimension of the test carrier (1) in the introduction direction (13), so that its handling end (1d) projects beyond the test carrier rest (6).

3. Test carrier analysis system according to claim 1, wherein the part of the fixing element (9) penetrating into the recess (8) is conical in shape.

4. Test carrier analysis system according to claim 1, wherein the actuating organ is constructed as a lever arrangement (20) swivellable about a swivelling axis (21) under the force exerted by a spring element (22),
the lever arrangement is disposed above the test carrier rest (6),
the fixing element (9) is connected at least in the measurement position positionally-stable with the lever arrangement (20) and
the spring element (22) is articulated to the lever arrangement (20), aligned and dimensioned as to its spring force in such a way that in the measurement position a sufficient force-loading results for the positioning of the test carrier (1).

5. Test carrier analysis system according to claim 4, wherein the connecting line (25) between the swivelling axis (21) of the lever arrangement (20) and the centre (9c) of the bit stop (9d) of the fixing element (9) runs approximately vertical in the measurement position.

6. Test carrier analysis system according to claim 4, wherein the articulation point (24) of the spring (22) to the lever arrangement (20) is so disposed in relation to the swivelling axis (21) that the spring element (22) passes during the swivelling of the lever arrangement (20) through a state of maximum spring tension which corresponds to an apex of the swivelling movement, so that the spring force is exerted away from the apex on both sides of the apex,
the swivel path of the lever arrangement (20) is limited in the introduction position by a swivel stop (26), and
the lever arrangement (20) comprises a contact surface (28) for the test carrier (1), which is so disposed that a test carrier (1) inserted into the apparatus on the test carrier rest (6) butts against it.

7. Test carrier analysis system according to claim 4, wherein the test carrier rest (6) is constructed as a surface with a recess (30) with which the lever arrangement (20) engages.

8. Test carrier analysis system according to claim 6, wherein the contact surface (28) is situated farther from the swivelling axis than the articulation point (24) of the spring element (22).

9. Test carrier analysis system according to claim 4, wherein a micro-switch (31) is so positioned that it is actuated in the measurement position by the lever arrangement (20).

## Revendications

1. Dispositif d'analyse avec support de test, constitué de supports de test (1) ayant une surface de mesure (2a) et d'un instrument d'évaluation associé, dans lequel le support de test (1) présente au moins un orifice (8) et l'instrument d'évaluation présente un dispositif de positionnement (5), afin de positionner un support de test (1) dans la position de mesure, le dispositif de positionnement (5) présente une base (6) pour le support de test et un élément de fixation (9) qui vient s'encliqueter dans l'orifice (8) dans la position de mesure et qui est relié à un organe d'actionnement, la base (6) du support de test est conçu de manière à servir de soutien au support de test (1) dans la position de mesure au moins au voisinage de l'orifice (8) dans un plan plat, le dispositif de positionnement (5) présente une butée (17) contre laquelle vient buter, dans la position de mesure, le support de test (1) avec son extrémité avant (1a, extrémité d'introduction) vue dans le sens de l'introduction (13), l'élément de fixation (9) présente une butée de profondeur (9b, 9d) délimitant la profondeur de pénétration dans l'orifice (8), et l'organe d'actionnement (10, 20) et l'élément de fixation (9) sont disposés et conçus de telle façon qu'ils exercent sur le support de test (1), dans la position de mesure, une force de pression qui présente, dans le sens de la butée (17), un composant parallèle à la suface du support de test, et dans le sens de la base (6) du support de test, un composant perpendiculaire à la surface du support de test, de sorte qu'elle presse le support de test (1) aussi bien sur la base (6) du support de test que contre la butée (17).

2. Dispositif d'analyse avec support de test, selon la revendication 1, dans lequel la base (6) du support de test est plus courte que la dimension du support de test (1) dans le sens de l'introduction (13), de sorte qu'il dépasse une extrémité de manipulation (1d) au delà de la base (6) du support de test.

3. Dispositif d'analyse avec support de test, selon la revendication 1, dans lequel la partie de l'élément de fixation (9) pénétrant dans l'orifice (8) est de forme conique.

4. Dispositif d'analyse avec support de test, selon la revendication 1, dans lequel l'organe d'actionnement est conçu sous la forme d'un dispositif de levier (20) qui peut pivoter, sous l'action d'un élément de ressort (22), autour d'un axe de pivotement (21), le dispositif de levier est placé au dessus de la base (6) du support de test, I'élément de fixation (9) est relié au dispositif de levier (20), dans la position de mesure, de façon stable et l'élément de ressort (22) est articulé sur le dispositif de levier (20), ajusté et dimensionné du point de vue de sa force par rapport au dispositif de levier (20) de telle façon que dans la position de mesure, il en résulte une charge suffisante pour le positionnement du support de test (1).

5. Dispositif d'analyse avec support de test, selon la revendication 4, dans lequel la ligne de liaison (25) entre l'axe de pivotement (21) du dispositif de levier (20) et le centre (9c) de la butée de profondeur (9d) de l'élément de fixation (9) s'étend, dans la position de mesure, en direction pratiquement verticale.

6. Dispositif d'analyse avec support de test, selon la revendication 4, dans lequel le point d'articulation (24) du ressort (22) se trouve situé sur le dispositif de levier (20) par rapport à l'axe de pivotement (21) en une position telle que l'élément de ressort (22) passe, lors du pivotement du dispositif de levier (20), par un état de tension élastique maximale, qui correspond à un apex du mouvement oscillant, de sorte que la force élastique agit des deux côtés de l'apex en s'éloignant de celui-ci, le trajet de pivotement du dispositif de levier (20) est limité, dans la position d'introduction, par une butée de pivotement (26), et le dispositif de levier (20) présente une surface de contact (28) avec le support de test (1) qui est disposée de façon qu'un support de test (1) introduit dans le dispositif sur la base (6) de support de test vient buter contre cette surface.

7. Dispositif d'analyse avec support de test, selon la revendication 4, dans lequel la base (6) de support de test est conçue sous la forme d'une surface ayant un orifice (30) dans lequel vient s'encliqueter le dispositif de levier (20).

8. Dispositif d'analyse avec support de test, selon la revendication 6, dans lequel la surface de contact (28) est plus éloignée de l'axe de pivotement que le point d'articulation (24) de l'élément de ressort (22).

9. Dispositif d'analyse avec support de test, selon la revendication 4, dans lequel un microinterrupteur (31) est positionné de telle façon que dans la position de mesure, il soit actionné par le dispositif de levier (20).
